# EUROPEAN PATENT APPLICATION

(11) **EP 1 274 263 A1**
(43) Date of publication of application: **08.01.2003**
(21) Application number: 01401739.6
(22) Date of filing: 29.06.2001
(51) Int. Cl.: H04Q 7/22, H04Q 7/38, H04L 12/18, H04B 7/26

(54) **Method and apparatus for determining a multicast group in a composite radio environment**

(71) Applicant: MOTOROLA, INC., Schaumburg, IL 60196 (US)
(72) Inventor: Boscovic, Dragan, 78450 Chavenay (FR); Robinson, Bill, Farnham, Surrey GU9 9ED (GB)
(74) Representative: Litchfield, Laura Marie

(57) **Abstract**

A plurality of mobile communication units (1,2,3) are allocated to receive a common content by a multicast broadcast, when this content would otherwise be delivered using individual channels. The allocated communication units (1,2,3) are determined from plural communication units (1,2,3,4) which may previously be operating on different cellular communication networks (11,12).

## Description

### Field of the Invention

This invention relates to the field of composite radio environments, i.e. radio environments that include both multicast broadcast capability and one or more cellular radio communication networks.

### Background of the Invention

In the field of this invention it is known that the advent of Digital Broadcasting and Communication technologies such as Digital Audio Broadcasting (DAB), Digital Video Broadcasting (DVB-T), GSM, GPRS, IMT-2000 system (e.g. Universal Mobile Telecommunication System - UMTS), BlueTooth and Hiperlan1/2 will enable a plethora of innovative, interactive multimedia services and applications. Service providers will have the opportunity to augment individual services by providing innovative combinations of these digital networks.

However, conventionally, complete application content is delivered via respective single radio systems, and more particularly individual channels to individual communication units. This is potentially wasteful of communication resource.

A known means for reducing overall use of communication resource when a common content is being delivered is to use multicast broadcast, in which a common channel is used to transmit common content to a plurality of communication units. However, conventionally this is only performed in a predetermined fashion for predetermined content/services. Moreover, this does not conventionally take into account characteristics introduced by composite radio environments, i.e. radio environments that include both multicast broadcast capability and one or more cellular radio communication networks.

A need therefore exists for an improved method of controlling transmission of content to mobile communication units in a mixed radio environment.

### Summary of Invention

In a first aspect, the present invention provides a method of determining a multicast group from a plurality of mobile communication units in a composite radio environment, as claimed in claim 1.

In a second aspect, the present invention provides a storage medium storing processor-implementable instructions, as claimed in claim 17.

In a third aspect, the present invention provides apparatus, as claimed in claim 18.

Further aspects are as claimed in the dependent claims.

The present invention allocates a plurality of mobile communication units to receive a common content by a multicast broadcast, when this content would otherwise be delivered using individual channels. The allocated communication units are determined from plural communication units which may previously be operating on different cellular communication networks.

The present inventors have envisaged that multiple combinations of delivery means will first be introduced to mobile and portable terminals because these services will provide significant added value to what can presently be provided to mobile and portable terminals for them to be commercially viable.

The following are examples of possible augmented services:
- Interactive narrow-casting and personalized A/V and data services: Normal narrow-cast phone services can be enhanced by combining them with Internet data. This may be useful when collaborative searches are required on the Internet.
- Enhanced phone-based multimedia applications:
   Multimedia based city guides could be made available on mobile terminals. The city guides could be in the form of Internet maps combined with panoramic screen shots or virtual reality models.
- E-Commerce scenario combining broadcast, Internet and connection based services.

The present inventors have envisaged that services such as these will benefit from avoiding or reducing the prior art approach of partitioning and sequentially delivering common content using different radio systems to different mobile communication units.

### Brief Description of the Drawings

Embodiments of the present invention will now be described, by way of example only, with reference to the accompanying drawings, in which:
FIG. 1 schematically illustrates part of an overall communication system, containing a plurality of communication networks, in which an embodiment of the invention may be implemented;
FIG. 2 is a flowchart representing the process steps employed in an embodiment of the present invention; and
FIG. 3 shows the system of FIG. 1 at a different stage during implementation of an embodiment.

### Detailed Description of Preferred Embodiments

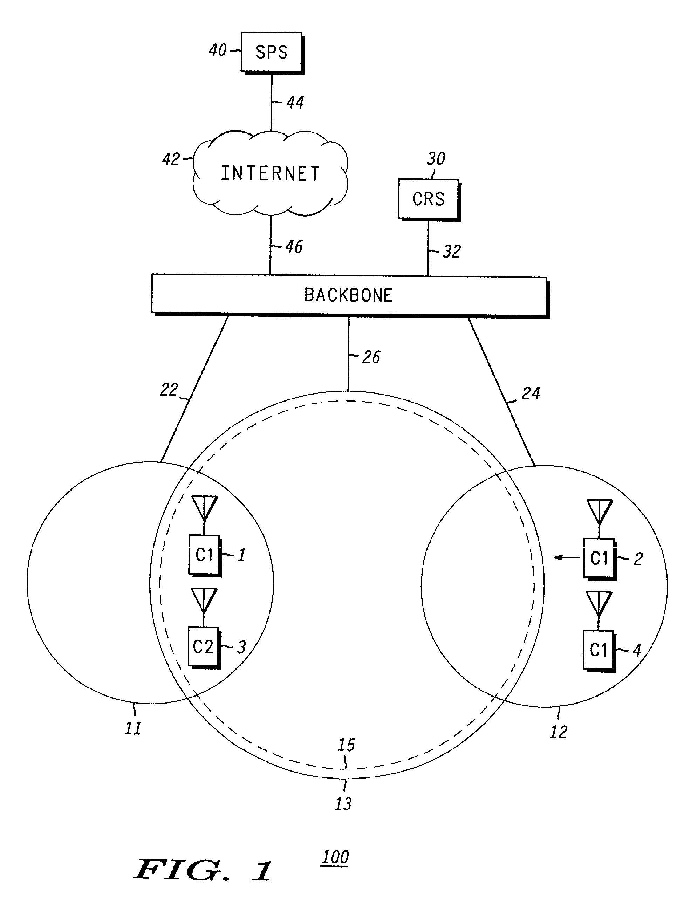

FIG. 1 shows part of an overall communication system 100 to which a first embodiment of the present invention may be applied. Four mobile communication units, in this example mobile telephones, are shown by way of example, namely first communication unit 1, second communication unit 2, third communication unit 3, and fourth communication unit 4.

The first and third communication units 1,3 are currently receiving communication service from a first communication network 11. The second and fourth communication units 2,4 are currently receiving communication service from a second communication network 12. In this embodiment each of these networks is a UMTS network. The system 100 also comprises a radio broadcast network 13, and FIG. 1 shows a predefined geographical area 15 specified by the radio broadcast network 13, where it is intended to perform multicast broadcast, as will be explained in more detail below.

In this embodiment, each of the cellular communication networks 11, 12 and the radio broadcast network 13 are made up of separate hardware such as switching centres, base stations, radio transceivers and so on. Also, they are separate in a commercial sense. However, in other embodiments, the different networks could share some or all of their hardware, but constitute different networks by virtue of being used by different commercial entities on a time division basis or with respect to different radio channels and so on. The networks may themselves be hiring such airtime or channels from different commercial entities using the relevant hardware.

Each of the cellular communication networks 11, 12 and the radio broadcast network 13 are coupled to a backbone entity, in this example an Ipv6 backbone, by communication links 22, 24 and 26 respectively. A first controller unit, in this example a composite radio server (CRS) 30, is coupled to the backbone 20 by a communication link 32. Also, a second controller unit, in this example a service provider server (SPS) 40, is coupled via the Internet 42 to the backbone 20, by means of communication links 44 and 46.

In this example, each of the first to fourth communication units 1,2,3,4 are receiving content from SPS 40 having logged on to the Internet. The first, second and fourth mobile communication units 1,2,4 are receiving a common content (e.g. a particular sports commentary) indicated by the text "C1" in FIG. 1, whereas the third mobile communication unit 3 is receiving a different content (e.g. downloading a particular item of music) indicated by "C2" in FIG. 1.

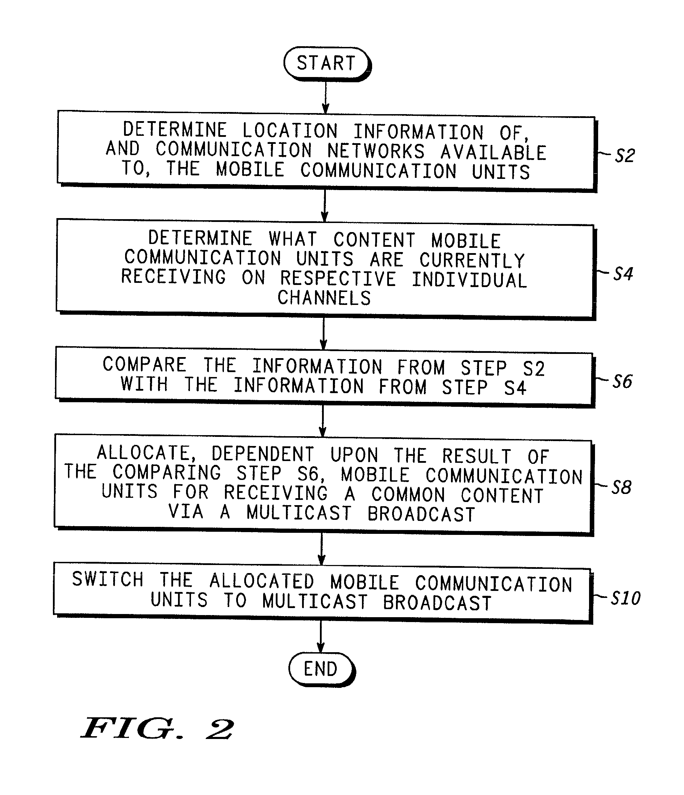

The process steps carried out under the first embodiment are shown in the flowchart of FIG. 2.

At step s2 the CRS 30 determines, for each of the communication units, availability to the communication units of different radio networks at the particular geographic location of the communication unit. This is provided as a matrix, and is formed by acquiring location information on a particular user from an adequate entity within the network and then using a look-up table to determine the radio networks available in the area. Thus, the CRS 40 determines, for each of the mobile communication units, location information and communication networks available to the mobile communication unit. Further optional data may be included, such as signal quality, estimated duration of the coverage, etc.

Alternatively, the CRS 30 may use a Common Control Channel (CCC) on each of the networks to perform specific measurements for the mobile communication units 1,2,3,4 in order to form the composite system matrix.

CRS 30 reports the composite system matrix (i.e. radio network availability, signal quality, estimated duration of the coverage, etc.) to the SPS 40.

At step s4, the SPS 40 determines the degree of content commonality between different users on the server, i.e. in this example determines that mobile communication units 1,2,4 are downloading the same content C1, whereas the third mobile communication unit 3 is downloading other content C2. Thus the SPS 40 determines, for each of the mobile communication units 1,2,3,4 what content the respective mobile communication unit is currently receiving on a respective individual channel via a current communication network the mobile communication unit is currently receiving service from.

The SPS 40 uses this information together with the composite system matrix to determine which users can be served by multicast. In more detail, at step s6 the SPS 40 compares the information of the matrix, i.e. the information gained from step s2, with the content information gained from step s4. At step s8, the SPS 40 allocates, dependent upon the result of the comparing step s6, mobile communication units for receiving a common content via a multicast broadcast. The multicast broadcast is intended for broadcast on a common channel in the predefined geographical area 15. In this example, mobile communication units 1,2,4 are allocated for the multicast, as they share the common content C1. Thus a process of determining a multicast group has been completed.

In this embodiment, the process is extended to include actual switching of the units to multicast. The allocated units will be switched to multicast when at least two such units are able to receive the multicast, in the predefined area 15 (in other embodiments, other minimum numbers may be set, or more complicated criteria employed for deciding if or when to switch to the multicast). However, in the situation shown in FIG. 1, switching to the multicast is not yet performed, because, of the allocated communication units, only the first mobile communication unit 1 is currently in the predefined region 15.

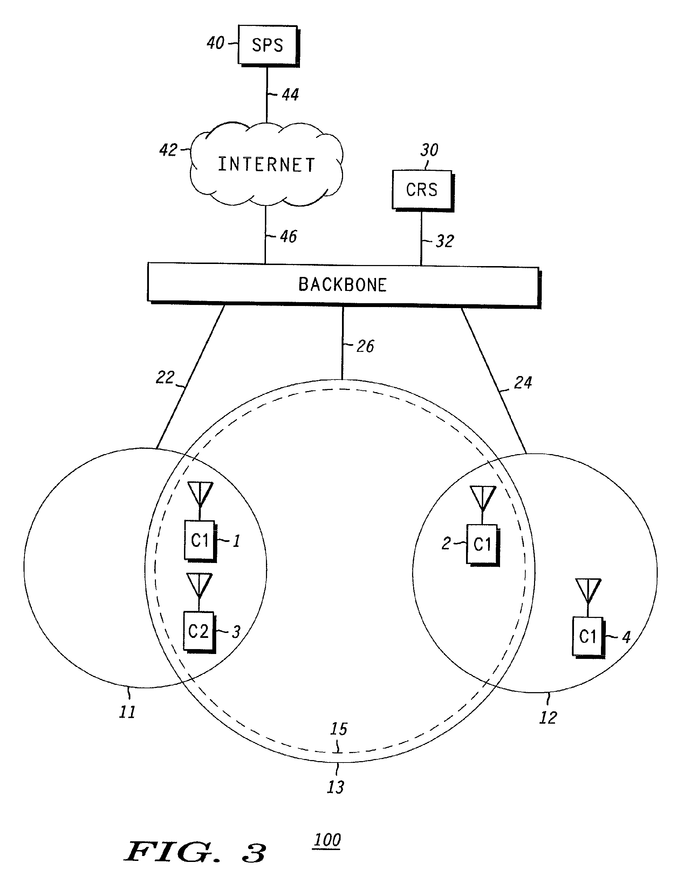

However, as indicated in FIG. 1, the second mobile communication unit is moving toward the predefined geographical area 15. FIG. 3 illustrates the overall situation once the second mobile communication unit 2 has reached the predefined geographical area 15.

Because (in this example) two of the allocated mobile communication units are now eligible for switching to the multicast mode, at step s10 such switching of these units to multicast broadcast is now performed. The SPS 40 uses a common control channel to inform them of the requested switch/handover. More particularly, the SPS communicates details of the allocated group of units to the CRS 30 which then establishes a paging channel on the broadcast component (e.g. DVB, DAB) for that group. Multicast Group Paging Channel (MGPG) is used to send all control information relevant to the given multicast group (change of coding information, parameters change for multimedia content, request for particular signal strength and quality of service measurements, etc.).

In the above embodiment, a relatively simple criterion is used to switch to multicast broadcast. However, in other embodiments, more complicated criteria for switching, and indeed for deciding whether to include a particular candidate mobile communication unit in the broadcast group, may be employed. These criteria may be determined such that the amount of data transmitted by multicast rather than by individual channels is substantially maximised.

In this embodiment, once multicast has started, the CRS 30 continues to monitor appropriate parameters (e.g. location, content, quality of service). When it becomes appropriate for a mobile communication unit within the multicast group to return to receiving service from its original cellular network appropriate, this is implemented, for example using the Multicast Group paging Channel. It may alternatively be determined that one or more of the mobile communication units should be handed over to a different multicast group or to a different cellular network.

The particular steps ascribed to each of the CRS 30 and SPS 40 in the above embodiment may, in other embodiments, be carried out by either server. Indeed, in other embodiments, other system components may perform some or all of the above steps.

In the above embodiments the cellular networks 11 and 12 are both UMTS networks. However, the invention is applicable to other networks, for example GPRS and GSM networks.

The above embodiments may be implemented by configuring or adapting any suitable apparatus, for example a computer or other processing apparatus, forming part or all of the above mentioned servers or other system components. Alternatively, the processes described may be implemented by a processor implementing processor-implementable instructions and/or stored on a suitable storage medium, such as computer memory, hard disk, floppy disk, ROM, PROM etc. The processor may be a computer, a network of computers, or one or more dedicated processors.

The present invention finds particular application in composite radio environments including cellular radio communication systems comprising for example UMTS networks. However, the inventive concepts contained herein are equally applicable to other cellular and other two-way communication networks. Whilst the specific, and preferred, implementations of the present invention are described above, it is clear that variations and modifications of such inventive concepts could be readily applied by one skilled in the art.

It will be understood that the method of establishing the paging channel for multicast group in composite radio environment (broadcast + cellular) described above tends to provide, inter alia, the following advantages:
- efficient use of the spectrum
- delivery of "common" pieces of an application to multiple users
- integration of broadcast and two-way radio technologies
- scalable composite radio architecture
- composite radio server may be added to the periphery of the network and enable a service provider to have an influence over the decision as to which delivery means will be used to meet quality of service expectations of a given user
- effective signalling means are provided since all users within a single multicast group use a dedicated paging channel.

## Claims

1. A method of determining a multicast group from a plurality of mobile communication units (1,2,3,4) in a composite radio environment, comprising the following steps:
(a) determining, for each of the mobile communication units (1,2,3,4), location information and communication networks available to the mobile communication unit;
(b) determining, for each of the mobile communication units (1,2,3,4), what content the mobile communication unit is currently receiving on a respective individual channel via a current communication network the mobile communication unit is currently receiving service from;
(c) comparing the information from the determining steps (a) and (b); and
(d) allocating, dependent upon the comparing step (c), mobile communication units (1,2,3) for receiving a common content via a multicast broadcast on a common channel in a predefined geographical area (15).

2. A method according to claim 1, further comprising the step of:
(e) switching the allocated mobile communication units (1,2,3) to multicast broadcast.

3. A method according to claim 2, further comprising the step of:
(f) switching one or more of the allocated mobile communication units (1,2,3) out of the multicast broadcast.

4. A method according to any of claims 1 to 3, wherein the determining step (a) is performed by acquiring the location information for a mobile communication unit from the current communication network and determining the available communication networks for the mobile communication unit from a look-up table.

5. A method according to any of claims 1 to 3, wherein the determining step (a) is performed using a common control channel on a plurality of communication networks (11,12) to obtain measurements related to the mobile communication units (1,2,3,4).

6. A method according to any preceding claim, wherein the determining step (a) comprises building a matrix containing the determined information.

7. A method according to any preceding claim, wherein step (a) is performed by a first controller unit (30); the determined information is transmitted to a second controller unit (40); and steps (b), (c) and (d) are performed by the second controller unit (40).

8. A method according to claim 7 when dependent from claim 2, further comprising the second controller unit (40) transmitting information, of the mobile communication units (1,2,3) allocated in step (d), to the first controller unit (30), and wherein step (e) is controlled by the second controller unit (40).

9. A method according to any of claims 2 to 8, wherein the switching step (e) is performed by establishing a paging channel to the allocated mobile communication units (1,2,3) and sending control information on the paging channel.

10. A method according to claim 9, wherein the control information comprises a handoff request.

11. A method according to any of claims 2 to 10, wherein the step (e) is performed responsive to a criterion being fulfilled.

12. A method according to claim 11, wherein the criterion comprises that at least a predetermined number of the allocated mobile communication units are currently able to be switched to the multicast broadcast.

13. A method according to claim 11 or 12, wherein the criterion comprises one or more factors related to operating parameters of the respective mobile communication units.

14. A method according to claim 13, wherein the operating parameters comprise signal quality and/or estimated duration of coverage by the multicast.

15. A method according to any preceding claim, wherein the amount of data transmitted by multicast rather than by individual channels is substantially maximised.

16. A method according to any preceding claim, wherein the current communication network (11,12) of one or more of the mobile communication units (1,2,3,4) comprises a cellular radio communication network, for example a UMTS network.

17. A storage medium storing processor-implementable instructions for controlling one or more processors to carry out the method of any of claims 1 to 16.

18. Apparatus adapted to implement the method of any of claims 1 to 16.
